# EUROPEAN PATENT SPECIFICATION

(11) **EP 3 597 884 B1**
(45) Date of publication and mention of the grant of the patent: **20.04.2022**
(21) Application number: 19193794.5
(22) Date of filing: 19.07.2017
(51) Int. Cl.: F02C 3/107, F02C 3/14, F02C 6/20, F02C 7/32, F02C 7/36

(54) **A MULTI-SPOOL GAS TURBINE ENGINE ARCHITECTURE**
ARCHITEKTUR EINES MEHRSPULIGEN GASTURBINENTRIEBWERKS
UNE ARCHITECTURE DE MOTEUR DE TURBINE MULTI-CORPS

(30) Priority: 19.07.2016 US 201662363955 P; 19.07.2016 US 201662363956 P; 19.07.2016 US 201662363952 P; 19.07.2016 US 201662363949 P; 19.07.2016 US 201662363947 P; 20.12.2016 US 201615384959; 17.01.2017 US 201715407423; 17.01.2017 US 201715407414; 17.01.2017 US 201715407445; 17.01.2017 US 201715407439
(43) Date of publication of application: 22.01.2020
(62) Divisional of application: 17182087.1
(73) Proprietor: Pratt & Whitney Canada Corp., Longueuil, Québec J4G 1A1 (CA)
(72) Inventor: LEFEBVRE, Guy, Longueuil, Québec J4G 1A1 (CA)
(74) Representative: Dehns

(56) References cited:
- EP-A1- 3 032 073
- EP-A2- 2 295 763
- EP-A2- 2 728 140

## Description

### TECHNICAL FIELD

The application relates generally to gas turbine engines and, more particularly, to a multi-spool engine architecture.

### BACKGROUND OF THE ART

Gas turbine engines are subject to continued improvements. For instance, there is continuing need to improve the thermodynamic cycle performance of engines while providing for compact and lightweight engine installations.

EP 2 728 140 A2 discloses a prior art booster assembly for a gas turbine engine comprising a gearing.

EP 2 295 763 A2 discloses a prior art reversed flow core for a turbofan with a fan drive gear system.

### SUMMARY

In an aspect of the disclosure, there is provided a reverse flow gas turbine engine as recited in claim 1.

Features of embodiments of the disclosure are set forth in the detailed description.

### DESCRIPTION OF THE DRAWINGS

Reference is now made to the accompanying figures in which:
Fig. 1 is a schematic cross-sectional view of a multi-spool gas turbine engine;
Fig. 2 is an enlarged cross-section of the engine shown in Fig. 1 and illustrating a gear driven low pressure (LP) compressor and an axially mounted accessory gearbox (AGB) driven through the center of the LP compressor; and
Fig. 3 is an enlarged cross-section view similar to Fig. 2 but illustrating another possible gear arrangement between the LP shaft and the LP compressor.

### DETAILED DESCRIPTION

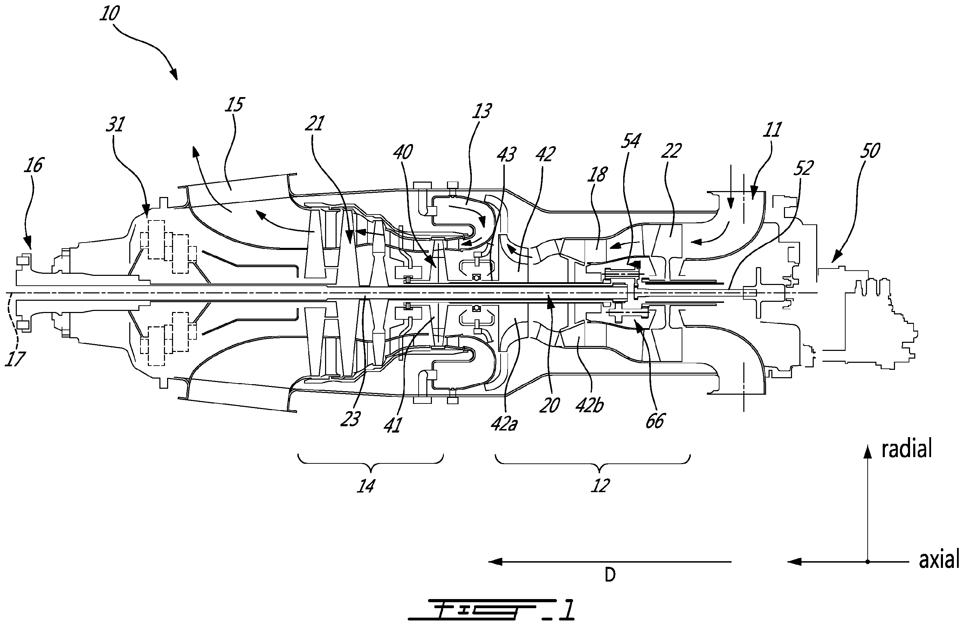

Fig. 1 illustrates a gas turbine engine 10 of a type preferably provided for use in subsonic flight, generally comprising in serial flow communication an air inlet 11, a compressor section 12 for pressurizing the air from the air inlet 11, a combustor 13 in which the compressed air is mixed with fuel and ignited for generating an annular stream of hot combustion gases, a turbine section 14 for extracting energy from the combustion gases, an exhaust outlet 15 through which the combustion gases exit the engine 10. The engine 10 further has a drive output shaft 16 having a front end configured to drive a rotatable load (not shown). The rotatable load can, for instance, take the form of a propeller or a rotor, such as a helicopter main rotor. Depending on the intended use, the engine 10 can be configured as a turboprop engine or a turboshaft engine. Fig. 1 illustrates a turboprop configuration. The gas turbine engine 10 has a centerline or longitudinal center axis 17 about which the compressor and turbine rotors rotate.

The gas turbine engine 10 has an axially extending central core which defines a gaspath 18 through which gases flow, as depicted by flow arrows in Fig. 1. The exemplary embodiment shown in Fig. 1 is a "reverse-flow" engine because gases flow through the gaspath 18 from the air inlet 11 at a rear portion thereof, to the exhaust outlet 15 at a front portion thereof. This is in contrast to "through-flow" gas turbine engines in which gases flow through the core of the engine from a front portion to a rear portion. The direction of the flow of gases through the gaspath 18 of the engine 10 disclosed herein can be better appreciated by considering that the gases flow through the gaspath 18 in the same direction D as the one along which an aircraft engine travels during flight. Stated differently, gases flow through the engine 10 from a rear end thereof towards the output shaft 16.

It will thus be appreciated that the expressions "forward" and "aft" used herein refer to the relative disposition of components of the engine 10, in correspondence to the "forward" and "aft" directions of the engine 10 and aircraft including the engine 10 as defined with respect to the direction of travel. In the embodiment shown, a component of the engine 10 that is "forward" of another component is arranged within the engine 10 such that it is located closer to output shaft 16 (e.g. closer to the propeller in a turboprop application). Similarly, a component of the engine 10 that is "aft" of another component is arranged within the engine 10 such that it is further away from the output shaft 16.

Still referring to Fig. 1, the engine 10 has multiple spools which perform compression to pressurize the air received through the air inlet 11, and which extract energy from the combustion gases before they exit the gaspath 18 via the exhaust outlet 15. More particularly, the illustrated embodiment comprises a low pressure (LP) spool 20 and a high pressure (HP) spool 40 mounted for rotation about the engine central axis. The LP and HP spools 20, 40 are independently rotatable about the central axis 17. The term "spool" is herein intended to broadly refer to drivingly connected turbine and compressor rotors and is, thus, not limited to a compressor and turbine assembly on a single shaft. As will be seen hereinbelow, it also includes a rotary assembly with multiple shafts geared together.

The LP spool 20 includes at least one component to compress the air that is part of the compressor section 12, and at least one component to extract energy from the combustion gases that is part of the turbine section 14. More particularly, the LP spool 20 has a low pressure turbine 21, also known as a power turbine, which may include different number of stages (three stages in the illustrated embodiment), and which drives an LP compressor 22 (also referred to as a boost). The low pressure turbine 21 drives the low pressure compressor 22, thereby causing the LP compressor 22 to pressurize incoming air from the air inlet 11. The LP compressor 22 is disposed just forward of the air inlet 11. Both the LP turbine 21 and the LP compressor 22 are disposed along the center axis 17. In the depicted embodiment, both the LP turbine 21 and the LP compressor 22 include rotatable components having an axis of rotation that is coaxial with the center axis 17. It is understood that they can each include one or more stages depending upon the desired engine thermodynamic cycle.

The LP turbine 21 is forward of the LP compressor 22. The LP turbine 21 is also aft of the exhaust outlet 15. The LP compressor 22 is forward of the air inlet 11. This arrangement of the LP turbine 21 and the LP compressor 22 provides for a reverse-flow engine 10 that has one or more LP compressor stages located at the rear of the engine 10, and which are driven by one or more low pressure turbine stages located at the front of the engine 10.

The LP spool 20 further comprises an LP shaft 23 (also known as a power shaft) coaxial with the center axis 17 of the engine 10. The LP turbine 21 is drivingly connected to the LP shaft 23. The LP shaft 23 allows the LP turbine 21 to drive the LP compressor 22 during operation of the engine 10. As will be discussed in greater details hereinbelow, the LP shaft 23 may be drivingly connected to the LP compressor 22 via a gear train to allow the LP compressor 22 to run at a different rotational speed from the LP turbine 21. This can provide more flexibility in the selection of design points for the LP compressor 22 while at the same time allowing to drivingly connect an axially mounted accessory gear box (AGB) to the HP spool 40 centrally through the LP compressor 22, thereby minimizing the engine envelope in a direction radial from the engine axis 17.

It is understood that the LP shaft 23 is not limited to the configuration depicted in Fig. 1. For instance, instead of being provided in the form of a one piece through shaft, it could be divided into serially interconnectable sections. Splines or other suitable connections could be provided between adjacent shaft sections to transfer torque from the LP turbine 21.

Still referring to Fig. 1, it can be appreciated that the LP shaft 23 also extends axially forwardly from the LP turbine 21 for driving the output shaft 16. The LP shaft 23 is drivingly connected to the output shaft 16 via a suitable reduction gear box (RGB) 31. A rotatable load, a propeller (not shown) according to the illustrated example, is connectable to a front end of the output shaft 16. In this way, the LP turbine 21 can be used to drive the rotatable load (e.g. the propeller) at a reduced speed relative to the speed of the LP turbine 21. In such a configuration, during operation of the engine 10, the LP turbine 21 drives the rotatable load such that a rotational drive produced by the LP turbine 21 is transferred to the rotatable load via the LP shaft 23, the RGB 31 and the output shaft 16 coming out forwardly from the RGB 31. The rotatable load can therefore be any suitable component, or any combination of suitable components, that is capable of receiving the rotational drive from the LP turbine section 21.

The RGB 31 processes and outputs the rotational drive transferred thereto from the LP turbine 21 via the LP shaft 23 through known gear reduction techniques. The RGB 31 allows for the load (e.g. the propeller according to the illustrated turboprop example) to be driven at its optimal rotational speed, which is different from the rotational speed of the LP turbine 21. The RGB 31 is axially mounted at the front end of the engine. The RGB 31 has an input and an output axis parallel (coaxial in the illustrated embodiment) to the central axis 17 of the engine 10.

In an alternate embodiment where the engine 10 is a turboshaft, the rotational load (which may include, but is not limited to, helicopter main rotor(s) and/or tail rotor(s), propeller(s) for a tilt-rotor aircraft, pump(s), generator(s), gas compressor(s), marine propeller(s), etc.) is driven by the LP turbine 21 via the RGB 31, or the RGB 31 may be omitted such that the output of the engine 10 is provided directly by the LP shaft 23.

The LP shaft 23 with the portions thereof extending forward and aft of the LP turbine 21 provides the engine 10 with bidirectional drive. Modularity criteria for gas turbine engines may require the use of distinct shaft sections in opposed axial directions from the LP turbine 21. The LP shaft sections may be directly or indirectly connected together. Alternately, the LP shaft 23 can be integral with a first segment of the LP shaft extending axially between the LP compressor 22 and the LP turbine 21, and a second segment extending between the rotatable load and the LP turbine 21. Whether the LP shaft 23 is integral or segmented, the LP turbine 21 provides rotational drive outputted at each end of the LP shaft 23.

In light of the preceding, it can be appreciated that the LP turbine 21 drives both the rotatable load and the LP compressor 22. Furthermore, the rotatable load, when mounted to the engine 10, and the LP compressor 22 are disposed on opposite ends of the LP turbine 21. It can thus be appreciated that one or more low pressure turbine stages are used to drive elements in front of the LP turbine (e.g. propeller, RGB 31, etc.) as well as to drive elements to the rear of the LP turbine (e.g. LP compressor 22). This configuration of the LP turbine 21 allows it to simultaneously drive the rotatable load and the LP compressor 22.

Still referring to Fig. 1, the HP spool 40 has at least one component to compress the air that is part of the compressor section 12, and at least one component to extract energy from the combustion gases that is part of the turbine section 14. The HP spool 40 is also disposed along the center axis 17 and includes an HP turbine 41 (also referred to as the compressor turbine) drivingly engaged (e.g. directly connected) to an HP compressor 42 by an HP shaft 43 rotating independently of the LP shaft 23. In the illustrated embodiment, the HP shaft 43 is a hollow shaft which rotates around the LP shaft 23. That is the LP shaft 23 extends axially through the HP shaft 43. Similarly to the LP turbine 21 and the LP compressor 22, the HP turbine 41 and the HP compressor 42 can each include one or more stages of rotors, depending upon the desired engine thermodynamic cycle, for example. In the depicted embodiment, the HP compressor 42 includes a centrifugal compressor 42a or impeller and an axial compressor 42b, both of which are driven by the HP turbine 41. During operation of the engine 10, torque is transferred from HP turbine 41 to the HP compressor 42 via HP shaft 43.

In the illustrated reverse flow engine configuration, the HP turbine 41 is aft of the LP turbine 21, and forward of the combustor 13. The HP compressor 42 is aft of the combustor 13, and forward of the LP compressor 22. From this arrangement of the HP turbine 41 and the HP compressor 42, it can be appreciated that during operation of the engine 10, the LP compressor 22 driven by the LP turbine 21 feeds pressurized air to the HP compressor 42. Therefore, the pressurized air flow produced by the LP compressor 22 is provided to the HP compressor 42 and contributes to the work of both the LP turbine 21 and the HP turbine 41. This arrangement provides for a boosted reverse flow engine.

It can thus be appreciated that the presence of the above-described LP and HP spools 20, 40 provides the engine 10 with a "split compressor" arrangement. More particularly, some of the work required to compress the incoming air is transferred from the HP compressor 42 to the LP compressor 22. In other words, some of the compression work is transferred from the HP turbine 41 to the more efficient LP turbine 21. This transfer of work may contribute to higher pressure ratios while maintaining a relatively small number of rotors. In a particular embodiment, higher pressure ratios allow for higher power density, better engine specific fuel consumption (SFC), and a lower turbine inlet temperature (sometimes referred to as "T4") for a given power. These factors can contribute to a lower overall weight for the engine 10. The transfer of compression work from the HP compressor 42 to the LP compressor 22 contrasts with some conventional reverse-flow engines, in which the high pressure compressor (and thus the high pressure turbine) perform all of the compression work.

In light of the preceding, it can be appreciated that the LP turbine 21 is the "low-speed" and "low pressure" turbine section when compared to the HP turbine 41. The LP turbine 21 is sometimes referred to as the "power turbine". The turbine rotors of the HP turbine 41 spin at a higher rotational speed than the turbine rotors of the LP turbine 21 given the closer proximity of the HP turbine 41 to the outlet of the combustor 13. Consequently, the compressor rotors of the HP compressor 42 may rotate at a higher rotational speed than the compressor rotors of the LP compressor 22.

The HP turbine 41 and the HP compressor 42 can have any suitable mechanical arrangement to achieve the above-described split compressor functionality. For example, and as shown in Fig. 1, the HP shaft 43 extends concentrically about the LP shaft 23 and is independently rotatable relative thereto. The relative rotation between the HP shaft 43 and the LP shaft 23 allow the shafts 23, 43 to rotate at different rotational speeds, thereby allowing the HP compressor 42 and the LP compressor 22 to rotate at different rotational speeds. The HP shaft 43 can be mechanically supported by the LP shaft 23 using bearings or the like.

Still referring to the embodiment shown in Fig. 1, the engine 10 also includes an accessory gearbox (AGB) 50. The AGB 50 receives a rotational input from the HP spool 40 and, in turn, drives accessories (e.g. fuel pump, starter-generator, oil pump, scavenge pump, etc.) that contribute to the functionality of the engine 10. The AGB 50 can be designed with side-facing accessories, top-facing accessories, or rear-facing accessories depending on the installation needs.

According to the illustrated embodiment, the AGB 50 is concentrically mounted axially aft of the LP compressor 22 as an axial extension of the engine envelope. The axial positioning of the AGB 50 allows minimizing the overall radial envelope of the engine as compared to a split compressor or boosted engine having the AGB mounted on a side of the engine and connected to the HP spool via a tower shaft. In the illustrated embodiment, the AGB is accommodated within the envelope of the engine in a plane normal to the central axis 17.

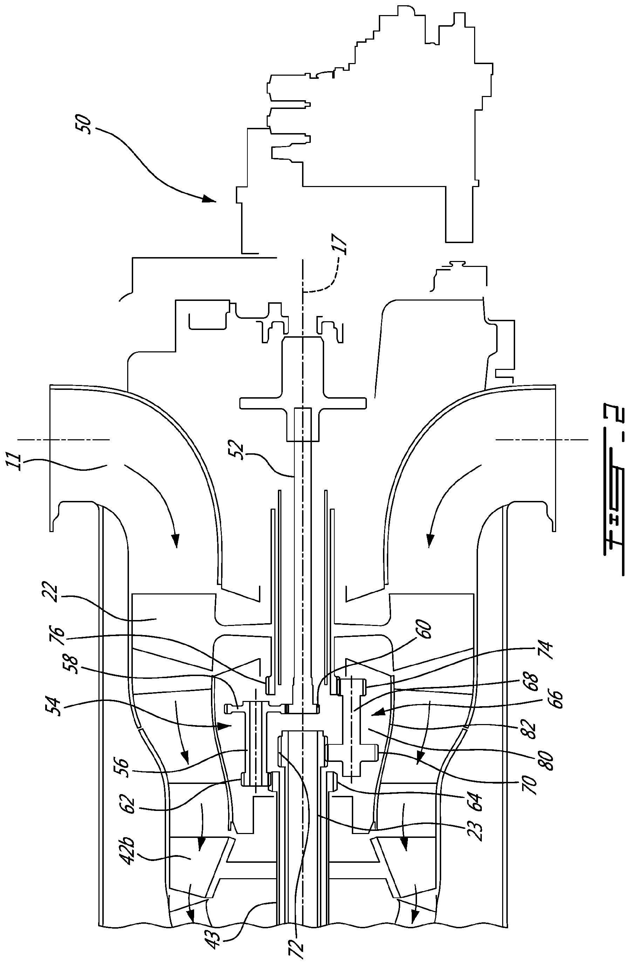

The AGB input drive axis is coaxial to the LP compressor centerline and the engine central axis 17. By so aligning the input axis of the AGB 50 relative to the LP compressor centerline, the drive input to the AGB 50 can be provided centrally through the center of the LP compressor 22, thereby eliminating the need for a tower shaft and an externally mounted gear arrangement. However, unlike conventional reverse flow engines (like the well-known PT6 engine manufactured by Pratt & Whitney Canada), which do not include a compressor boost, the presence of the LP compressor 22 axially between the HP compressor 42 and the AGB 50 physically interferes with the connection of the AGB 50 with the HP spool 40. This particular problem is overcome by passing the input drive shaft 52 of the AGB 50 centrally through the LP compressor 22. As best shown in Fig. 2, the AGB input shaft 52 extends along the engine central axis 17 through the central bore of the LP compressor 22. A first gear train 54 is provided for drivingly connecting the AGB input shaft 52 to the HP compressor 42. In the illustrated embodiment, the first gear train 54 comprises a geared shaft 56 having a first gear 58 in meshing engagement with a corresponding gear 60 at a distal end of the AGB drive shaft 52 and a second gear 62 in meshing engagement with a corresponding gear 64 at the rear end of the HP shaft 43 or HP compressor 42. To physically permit this gear drive connection between the AGB input shaft 52 and the HP spool 40 through the center of the LP compressor 22, a discontinuity between the LP shaft 23 and the LP compressor 22 is provided and the LP shaft 23 is drivingly connected to the LP compressor 22 via a second gear train 66. Indeed, if the LP shaft 23 was to extend continuously to the LP compressor 22, the AGB input shaft 52 could not be geared to the geared shaft 56, which is disposed radially outwardly relative to the LP shaft 23.

According to the illustrated embodiment, the second gear train 66 comprises a geared shaft 68 comprising a first gear 70 in meshing engagement with a corresponding gear 72 at the rear end of the LP shaft 23 and a second gear 74 in meshing engagement with a corresponding gear 76 on a hub portion projecting axially forwardly from the LP compressor 22. As mentioned herein above, the gear connection between the LP turbine 21 and the LP compressor 22 is also advantageous in that it allows to drive the LP compressor at a different speed than the LP turbine. It can thus allow for overall thermodynamic cycle performance improvement.

According to the illustrated embodiment, the first and second gear trains 54 and 66 are contained in a central cavity 80 radially inwardly of the gaspath 18 axially between the HP and LP compressors 42 and 22. The central cavity 80 is bounded by the compressor inner gaspath wall 82. This provides for a compact arrangement.

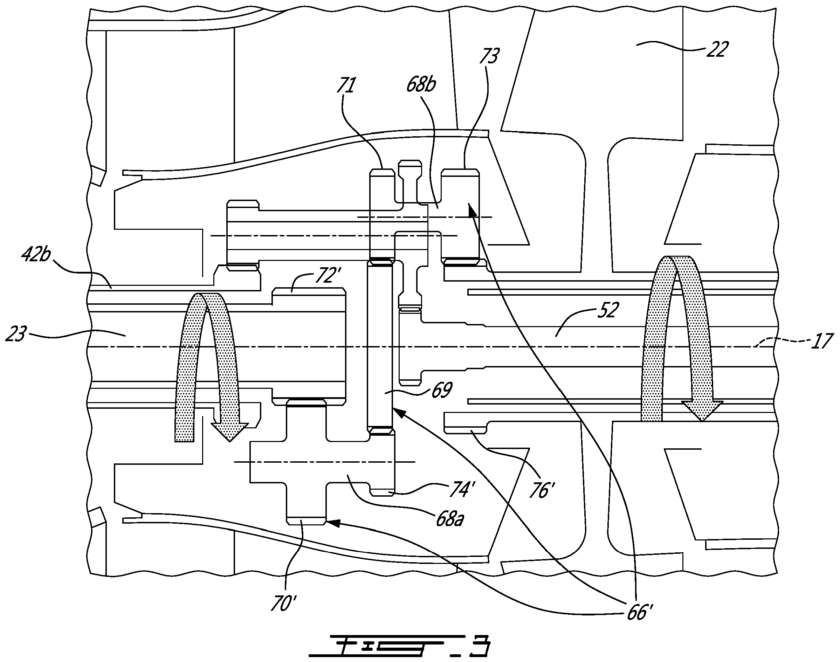

It is understood that the first and second gear trains 54, 66 could adopt various configurations. The configuration illustrated in Figs. 1 and 2 is given for illustrative purposes only. For instance, as shown in Fig. 3, the gear train 66' between the LP shaft 23 and the LP compressor 22 could comprise additional gears to provide a desired gear ratio between the LP turbine 21 and the LP compressor 22. According to the illustrated alternative, the gear train 66' comprises first and second geared shafts 68a, 68b in meshing engagement with an intermediate gear 69. The first gear shaft 68a is provided with a first gear 70' at a first end thereof in meshing engagement with a gear 72' at the rear end of the LP shaft 23 and a second gear 74' in meshing engagement with the intermediate gear 69. The second gear shaft 68b has a first gear 71 in meshing engagement with the intermediate gear 69 and a second gear 73 in meshing engagement with a gear 76' on the LP compressor 22.

Also according to a non-illustrated alternative, the HP shaft 43 could extend centrally through the LP compressor 22 directly into the AGB 50. In this embodiment, the AGB input shaft 52 could be viewed as part of the HP shaft 43. The end of the HP shaft 43 would carry a gear in meshing engagement with a corresponding gear at the AGB input end. According to such an embodiment, the LP shaft 23 could also be extended axially rearwardly through the LP compressor 22 and the gear train between the LP shaft 23 and the LP compressor 22 could be provided within the AGB 50 aft of the LP compressor 22.

It can thus be appreciated that at least some of the embodiments of the engine 10 disclosed herein provide a mechanical architecture of turbomachinery that allows for a split compressor system in a compact PT6 type configuration. Such a split compressor engine in a reverse flow or through flow configuration may be used for aircraft nose installations, as well as for wing installations.

The above description is meant to be exemplary only, and one skilled in the art will recognize that changes may be made to the embodiments described without departing from the scope of the invention as defined by the appended claims.

## Claims

1. A reverse flow gas turbine engine (10), comprising:
an output drive shaft (16) having a front end configurable to drivingly engage a rotatable load;
a low pressure (LP) spool (20) including an LP turbine (21) drivingly engaged to the output drive shaft (16), and an LP compressor (22) drivingly connected to the LP turbine (21) via a gear train (66;66'), the LP turbine (21) disposed forward of the LP compressor (22) relative to a front end of the output drive shaft (16);
a high pressure (HP) spool (40) including an HP turbine (41) and an HP compressor (42) drivingly engaged to an HP shaft (43) rotatable independently of the LP spool (20), the HP compressor (42) disposed forward of the LP compressor (22) and in fluid communication therewith, and the HP turbine (41) disposed aft of the LP turbine (21) and in fluid communication therewith; and
an accessory gearbox (AGB) (50), the AGB (50) being mounted aft of the LP compressor (21), wherein the AGB (50) has an input axis which is coaxial to a centerline (17) of the LP compressor (21), and the AGB (50) has a drive input shaft (52) extending along the centerline (17) through a central bore of the LP compressor (21), the drive input shaft (52) being drivingly connected to the HP spool (40).

## Patentansprüche

1. Gegenstromgasturbinentriebwerk (10), umfassend:
eine Ausgangsantriebswelle (16), die ein vorderes Ende aufweist, das dazu konfigurierbar ist, antreibend mit einer drehbaren Last in Eingriff zu stehen;
eine Niederdruck-(ND-)Spule (20), die eine ND-Turbine (21), die antreibend mit der Ausgangsantriebswelle (16) in Eingriff steht, und einen ND-Verdichter (22), der über einen Getriebezug (66; 66') antreibend mit der ND-Turbine (21) verbunden ist, beinhaltet, wobei die ND-Turbine (21) relativ zu einem vorderen Ende der Ausgangsantriebswelle (16) vor dem ND-Verdichter (22) angeordnet ist;
eine Hochdruck-(HD-)Spule (40), die eine HD-Turbine (41) und einen HD-Verdichter (42) beinhaltet, die antreibend mit einer HD-Welle (43) in Eingriff stehen, die unabhängig von der ND-Spule (20) drehbar ist, wobei der HD-Verdichter (42) vor dem ND-Verdichter (22) angeordnet ist und in Fluidkommunikation damit steht und die HD-Turbine (41) hinter der ND-Turbine (21) angeordnet ist und in Fluidkommunikation damit steht; und
ein Hilfsgerätegetriebe (AGB) (50), wobei das AGB (50) hinter dem ND-Verdichter (21) montiert ist, wobei das AGB (50) eine Eingangsachse aufweist, die koaxial zu einer Mittellinie (17) des ND-Verdichters (21) ist, und das AGB (50) eine Antriebseingangswelle (52) aufweist, die sich entlang der Mittellinie (17) durch eine zentrale Bohrung des ND-Verdichters (21) erstreckt, wobei die Antriebseingangswelle (52) antreibend mit der HD-Spule (40) verbunden ist.

## Revendications

1. Moteur à turbine à gaz à flux inversé (10) comprenant :
un arbre d'entraînement de sortie (16) ayant une extrémité avant configurable pour venir en prise par entraînement avec une charge rotative ;
un corps basse pression (BP) (20) comportant une turbine BP (21) en prise par entraînement avec l'arbre d'entraînement de sortie (16), et un compresseur BP (22) connecté par entraînement à la turbine BP (21) via un train d'engrenages (66 ; 66'), la turbine BP (21) étant disposée en avant du compresseur BP (22) par rapport à une extrémité avant de l'arbre d'entraînement de sortie (16) ;
un corps haute pression (HP) (40) comportant une turbine HP (41) et un compresseur HP (42) en prise par entraînement avec un arbre HP (43) pouvant tourner indépendamment du corps BP (20), le compresseur HP (42) étant disposé en avant du compresseur BP (22) et en communication fluidique avec celuici, et la turbine HP (41) étant disposée en arrière de la turbine BP (21) et en communication fluidique avec celle-ci ; et
un boîtier d'entraînement des accessoires (AGB) (50), l'AGB (50) étant monté à l'arrière du compresseur BP (21), dans lequel l'AGB (50) a un axe d'entrée qui est coaxial à une ligne médiane (17) du compresseur BP (21), et l'AGB (50) a un arbre d'entrée d'entraînement (52) s'étendant le long de la ligne médiane (17) à travers un alésage central du compresseur BP (21), l'arbre d'entrée d'entraînement (52) étant connecté par entraînement au corps HP (40).
